# FASCICULE DE BREVET EUROPEEN

(11) **EP 2 875 282 B1**
(45) Date de publication et mention de la délivrance du brevet: **19.05.2021**
(21) Numéro de dépôt: 13739395.5
(22) Date de dépôt: 15.07.2013
(51) Int. Cl.: F21V 5/00, F21V 14/06, F21S 41/14, F21S 41/26

(54) **DISPOSITIF D'EMISSION D'UN FAISCEAU LUMINEUX ET PROJECTEUR, NOTAMMENT POUR VEHICULE AUTOMOBILE, COMPRENANT LEDIT DISPOSITIF**
LICHTSTRAHLEMITTIERENDE VORRICHTUNG UND SCHEINWERFER, INSBESONDERE FÜR EIN KRAFTFAHRZEUG, MIT DIESER VORRICHTUNG
LIGHT BEAM EMITTING DEVICE, AND HEADLIGHT, IN PARTICULAR FOR A MOTOR VEHICLE, INCLUDING SAID DEVICE

(30) Priorité: 19.07.2012 FR 1256966
(43) Date de publication de la demande: 27.05.2015
(73) Titulaire: Valeo Vision Belgique, 93012 Bobigny Cedex (FR)
(72) Inventeur: MALIAR, Rémi, F-59880 Saint Saulve (FR); HERBIN, Cyril, F-59530 Potelle (FR); HAYET, Frederic, F-59225 Haveluy (FR); DRAGUET, Olivier, B-7170 Manage (BE)
(86) Numéro de dépôt international: PCT/EP2013/064882
(87) Numéro de publication internationale: WO 2014/012878

(56) Documents cités:
- EP-A1- 1 739 346
- EP-A2- 2 138 760
- AT-U1- 8 358
- DE-A1-102010 008 596
- US-A- 3 124 309
- US-A1- 2009 067 186

## Description

La présente invention concerne un dispositif d'émission d'un faisceau lumineux et un projecteur, notamment de véhicule automobile, comprenant ledit dispositif.

Le document EP 1 739 346 A1 montre un dispositif comprenant les caractéristiques du préambule de la revendication 1.

Il est connu des projecteurs permettant de réaliser un faisceau lumineux délimité par une ligne de coupure à un certain niveau au-dessus de la chaussée. Ladite ligne de coupure est réalisée à l'aide de caches et/ou de réflecteurs.

Afin de s'assurer que le faisceau ne soit ni trop haut ni trop bas, il est nécessaire de permettre un réglage du positionnement vertical de ladite ligne de coupure. On emploie pour cela des dispositifs permettant de déplacer les caches ou réflecteurs, prévus mobiles.

Cela étant, l'utilisation de caches ou réflecteurs articulés présentent certains inconvénients et il est avantageux de prévoir des solutions faisant appel à d'autre organes mobiles.

L'invention propose en conséquence un dispositif d'émission d'un faisceau lumineux comprenant une lentille et des moyens réalisant une ligne de coupure du faisceau, ledit dispositif étant configuré pour autoriser un réglage d'un positionnement de ladite ligne de coupure, selon une direction donnée, notamment verticale, en fonction d'un positionnement angulaire de ladite lentille autour d'un axe d'articulation, ladite lentille comprenant une partie, dite optique, de transmission du faisceau et une partie d'articulation en rotation autour dudit axe d'articulation.

On dispose de la sorte d'un dispositif d'émission d'un faisceau qui ne dépend pas de l'articulation de caches ou de réflecteurs pour le positionnement de la ligne de coupure du faisceau.

Ladite partie optique et ladite partie d'articulation sont avantageusement constituées de la même matière.

Selon l'invention, ladite partie d'articulation et ladite partie optique sont venues de matière en une seule pièce. La lentille peut être ainsi moulée en une seule pièce. Cela améliore également la précision de montage du dispositif d'émission. Selon l'invention, ladite partie optique s'étend à partir de bras de ladite partie d'articulation en s'écartant radialement dudit axe d'articulation, tandis que lesdits bras comprennent des tourillons d'articulation de la lentille autour dudit axe d'articulation.

Selon différents modes de réalisation de l'invention qui pourront être pris ensemble ou séparément :
- ledit dispositif comprend une source lumineuse, notamment une diode électroluminescente ;
- ladite lentille et ladite source lumineuses sont agencées de façon à former ladite ligne de coupure,
- ledit axe d'articulation passe sensiblement par ladite source lumineuse,
- ladite lentille présente un foyer au niveau de ladite source lumineuse,
- ladite partie d'articulation comprend des moyens d'entrainement en rotation de ladite lentille,
- lesdits moyens d'entrainement comprennent au moins une fourchette nervurée destinée à coopérer avec une vis de réglage orientée transversalement, notamment orthogonalement, audit axe de rotation,
- lesdits moyens d'entrainement sont positionnés de part et d'autre de ladite partie optique, selon ledit axe d'articulation,
- ledit dispositif comprend un support fixe de ladite lentille,
- ledit support fixe comprend des bras d'articulation en rotation de ladite lentille,
- ledit support comprend une carte de commande électronique au-delà de laquelle lesdits bras d'articulation s'étendent radialement en direction dudit axe d'articulation,
- ladite carte de commande est radialement décalée par rapport à ladite source lumineuse.

L'invention concerne également un projecteur, notamment pour véhicule automobile, comprenant le dispositif d'émission évoqué plus haut. Ledit projecteur comprend, par exemple, un boîtier en forme d'enveloppe sensiblement cylindrique.

Ledit boîtier comprend une face interne qui pourra être munie de nervures de guidage desdits bras d'articulation du support.

Ladite face interne du boîtier comprend avantageusement des nervures d'encliquetage de ladite partie d'articulation de la lentille.

Selon un aspect de l'invention, ledit boîtier est configuré pour autoriser un montage par l'arrière dudit support. Selon une variante, ledit boîtier est configuré pour autoriser un montage par l'avant, notamment selon l'orientation desdites nervures de guidage et/ou d'encliquetage prévues sur ledit boîtier.

Ledit projecteur peut être un anti brouillard, émettant un faisceau avec une coupure linéaire, destinée à être une ligne de coupure supérieure horizontale lors du fonctionnement du projecteur, bien que cette application ne doive nullement être considérée comme limitative.

D'autres caractéristiques et avantages de l'invention apparaîtront à la lecture de la description détaillée qui suit pour la compréhension de laquelle on se reportera aux dessins annexés parmi lesquels :
- la figure 1 est une vue en perspective qui représente de façon éclatée un premier mode de réalisation du dispositif d'émission et du projecteur selon l'invention ;
- la figure 2 est une vue en perspective du projecteur de la figure 1, illustré de façon assemblé ;
- la figure 3 est une vue identique à la figure 1 illustrant une variante de réalisation de l'invention;
- la figure 4 est une vue de coupe selon un plan diamétral vertical du projecteur de la figure 3,
- la figure 5 est une vue de coupe selon un plan diamétrale horizontal du projecteur de la figure 3.

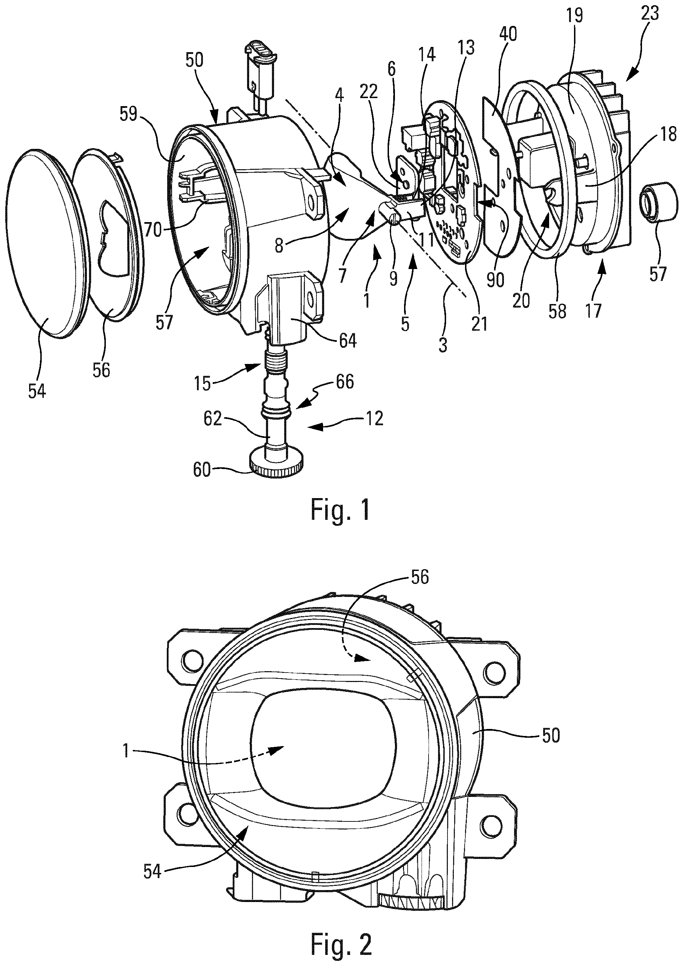

Comme illustré aux figures 1 et 2, le dispositif d'émission d'un faisceau lumineux conforme à l'invention comprend au moins une lentille 1 et des moyens réalisant une ligne de coupure du faisceau. On entend par là que ledit dispositif permet l'émission d'un faisceau lumineux tronqué ou à tout le moins présentant une décroissance très rapide de la luminosité émise en dessous d'un certain niveau correspondant à ladite ligne de coupure. Pour simplifier, on peut considérer que le faisceau se trouve limité sous un plan, notamment destiné à être sensiblement horizontal et à se trouver à une certaine hauteur au dessus de la chaussée.

Selon l'invention, ledit dispositif est configuré pour autoriser un réglage d'un positionnement de ladite de coupure du faisceau, selon une direction donnée, notamment destinée à être verticale, en fonction d'un positionnement angulaire de ladite lentille 1 autour d'un axe d'articulation 3, destiné à être orienté selon l'axe Y-Y du véhicule équipé dudit dispositif. Toujours selon l'invention, pour permettre ce réglage, ladite lentille 1 comprend une partie 4, dite optique, de transmission du faisceau et une partie 5 d'articulation en rotation autour dudit axe d'articulation 3.

On dispose de la sorte d'une solution grâce à laquelle le réglage de la ligne de coupure s'effectue par un actionnement d'un organe, à savoir la lentille 1, servant à la transmission du faisceau.

Ladite partie optique 4 et ladite partie d'articulation 5 sont avantageusement constituées de la même matière. Avantageusement, ladite partie d'articulation 5 et ladite partie optique 4 sont venues de matière en une celle pièce. La lentille peut être ainsi moulée en une seule pièce.

Ledit dispositif comprend en outre une source lumineuse 6, notamment une diode électroluminescente, placée en amont de ladite lentille 1 selon un axe optique dudit dispositif.

Ladite ligne de coupure est ici obtenue par un agencement mutuel de ladite lentille 1 et de ladite source lumineuse 6, comme cela est connu, notamment des documents EP1762776, en particulier les modes de réalisation correspondant aux figures 11 et suivantes, et/ou EP1970619, en particulier le mode de réalisation de la figure 1.

De façon avantageuse, ledit axe d'articulation 3 passe sensiblement par ladite source lumineuse 6. Ladite lentille 1 pourra en outre présenter un foyer au niveau de ladite source lumineuse 6. On dispose de la sorte d'un faisceau dont les caractéristiques ne varient pas en fonction du positionnement angulaire de la lentille 1 et donc ne dépendent pas du positionnement de la ligne de coupure.

Ladite partie optique 4 s'étend, par exemple, à partir de bras 7 de ladite partie d'articulation 5 en s'écartant radialement dudit axe d'articulation 3. Autrement dit, ladite lentille 1 comprend des flancs s'étendant en direction dudit axe d'articulation 3 à partir d'une zone frontale 8 de ladite lentille 1, ladite zone frontale 8 étant la partie de ladite lentille 1 se trouvant la plus éloignée dudit axe d'articulation 3. Ladite partie optique 4 de la lentille 1 s'étend en particulier au niveau de ladite zone frontale 8.

Lesdits bras 7 sont situés de part et d'autre de ladite partie optique 4, selon la direction dudit axe d'articulation 3. Ils comprennent, par exemple, des tourillons 9 d'articulation de la lentille 1 autour dudit axe d'articulation 3. Lesdits tourillons 9 présentent une forme cylindrique et sont orientés selon ledit axe d'articulation 3. Ledit dispositif est configuré pour autoriser une rotation desdits tourillons 9 sur eux-mêmes autour dudit axe d'articulation 3 et, par suite, de l'ensemble de la lentille 1 autour du même axe.

Entre lesdits tourillons 9, ladite lentille 1 laisse un espace libre où ladite source lumineuse 6 pourra être logée, au niveau dudit axe d'articulation 3, comme déjà évoqué plus haut.

Ladite partie d'articulation 4 comprend en outre ici des moyens d'entrainement en rotation de ladite lentille 1. Lesdits moyens d'entrainement comprennent, par exemple, au moins une fourchette 11 présentant un nervurage, destinée à coopérer avec une vis de réglage 12, orientée transversalement, notamment orthogonalement, audit axe de rotation 3 et/ou audit nervurage. Ladite vis de réglage 12 sera détaillée plus loin.

Lesdites fourchettes 11 sont ici issues desdits tourillons 9. Elles comprennent des flancs latéraux 13, orientés radialement par rapport à l'axe de rotation. Lesdits flancs latéraux 13 des fourchettes 11 sont munis de nervures 14 situées en vis-à-vis les unes des autres d'un desdits flanc latéral 13 à l'autre. Lesdites nervures 14 définissent de la sorte une contrepartie à un filetage 15 situé au niveau de ladite vis de réglage 12. Lesdites nervures 14 sont avantageusement radiales et/ou parallèles entre elles.

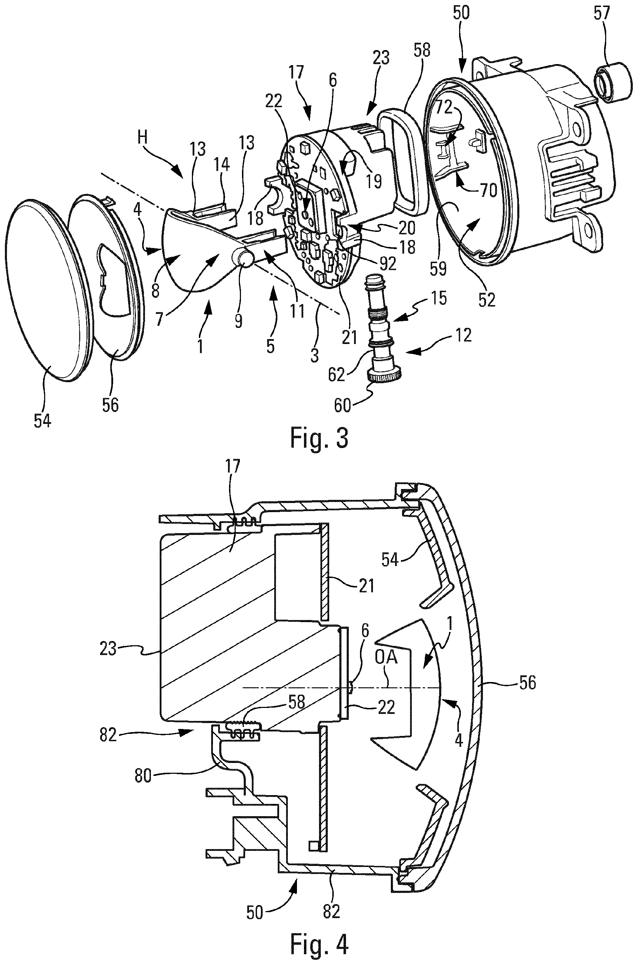

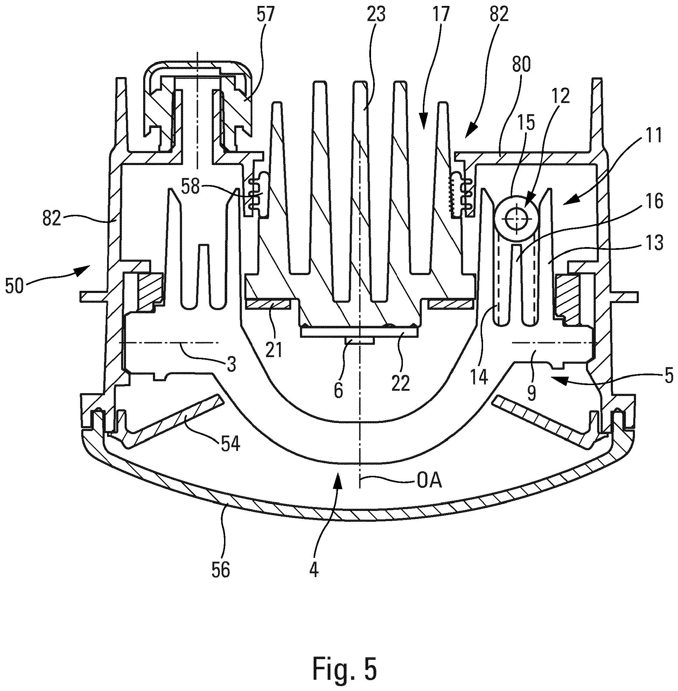

Lesdites fourchettes 11 pourront en outre comprendre une languette 16 (figures 4 et 5) située, notamment centrée, entre leurs flancs radiaux 13. Ladite languette 16 est, par exemple, radiale et sert de butée radiale à la vis de réglage 12.

Lesdits moyens d'entrainement sont avantageusement positionnés de part et d'autre de ladite partie optique 4 de la lentille 1, selon ledit axe d'articulation 3. Autrement dit, il est ici prévu une fourchette 11 telle que décrite plus haut au niveau de chaque tourillon 9. On dispose de la sorte d'un dispositif d'émission qui pourra être utilisé de façon indifférencié dans des projecteurs destinés à se trouver du côté droit ou gauche d'un véhicule avec une symétrisation du positionnement de la vis de réglage.

Ledit dispositif pourra en outre comprendre un support fixe 17 de ladite lentille 1. Ledit support fixe 17 comprenant ici des bras 18 d'articulation en rotation de ladite lentille 1. Lesdits bras 18 sont destinés à coopérer avec ladite partie d'articulation 5 de la lentille 1, en particulier lesdits tourillons 9, de façon à conférer à ladite lentille 1 un degré de liberté en rotation autour dudit axe d'articulation 3, sous l'action de la vis de réglage 12. Lesdits bras 18 sont issus radialement d'une partie de base 19 dudit support fixe 17 et ils présentent en extrémité distale une fourchette 20, orientée radialement de façon à accueillir lesdits tourillons 9 en les laissant libre en rotation autour dudit axe d'articulation 3.

Ledit support fixe 17 comprend ici en outre une carte de commande électronique 21 située en vis-à-vis de ladite partie de base 19 dudit support 17. Ladite carte 21 sert, notamment, à contrôler ladite source lumineuse 6. Lesdits bras d'articulation 18 du support fixe 17 s'étendent de part et d'autre de ladite carte 21, selon ledit axe d'articulation 3.

Ladite carte de commande 21 est avantageusement décalée radialement selon l'axe de rotation, c'est-à-dire, ici, longitudinalement selon l'axe OA global d'émission de la source lumineuse, par rapport à ladite source lumineuse 6. Autrement dit, ladite source lumineuse 6 est surélevée par rapport à ladite carte de commande 21. On facilite de la sorte le passage dudit axe d'articulation 3 par ladite source lumineuse 6.

Plus précisément, ici, ladite source lumineuse 6 est située au niveau d'une carte électronique spécifique 22 dudit dispositif et ladite carte 22 est surélevée par rapport à ladite carte de commande 21, en direction dudit axe d'articulation 3. Ladite carte spécifique 22 est constitué, par exemple, d'un substrat tel qu'un SMI tandis que ladite carte de commande 21 est constitué, par exemple, d'un substrat tel qu'un FR4. Ladite carte spécifique 22 est portée par ladite carte de commande 21.

Ledit dispositif d'émission pourra en outre comprendre un dissipateur thermique 23, prévue à l'arrière de ladite partie de base 19 dudit support fixe 17 et/ou une feuille de matériau adhésif 40 permettant la fixation de ladite carte de commande 21 à ladite partie de base 19 dudit support. Ledit dissipateur thermique 23 est plus particulièrement en relation d'échange thermique avec ladite carte spécifique 22.

Cela étant, l'invention concerne également un projecteur comprenant ledit dispositif d'émission.

Ledit projecteur comprend un boîtier 50 définissant un logement 52 pour ledit dispositif d'émission. De façon classique, ledit projecteur pourra en outre comprendre une glace de fermeture 54 et une éventuelle pièce de style ou cache 56 située entre ladite glace de fermeture 54 et ladite lentille 1, selon l'axe optique dudit dispositif d'émission.

Ledit projecteur comprend en outre ici un joint 58, annulaire, afin d'assurer une étanchéité entre ledit support fixe 17 et ledit boîtier 50. Il pourra aussi comprendre un dispositif de ventilation 57 permettant de mettre le logement 52 en communication avec l'extérieur.

Ledit projecteur comprend également ladite vis de réglage 12. Cette dernière comprend ici une tête 60, permettant sa manipulation, une tige 62 s'étendant axialement à partir de ladite tête 60 et, le long de ladite tige 62, ledit filetage 15, destiné à coopérer avec lesdites nervures 14 de la lentille 1. Ledit filetage 15 est configuré pour autoriser une rotation de ladite lentille 1 selon une plage angulaire, par exemple, de +/- 5°.

Selon une possibilité de réalisation, ledit support fixe 17 peut comprendre un contour non fermé ou fermé, à savoir respectivement une échancrure 90, comme par exemple illustré en figure 1, ou un trou traversant 92, comme par exemple illustré en figure 3. L'échancrure 90 et le trou 92 traversant sont agencés de manière à laisser passer la fourchette 11 de la partie d'articulation, et sont suffisamment large pour permettre le débattement de la fourchette 11 de la partie d'articulation. Cela autorise un montage longitudinal de la lentille sur le boîtier et à travers le support.

On peut faire dépasser suffisamment la fourchette 11 de la partie d'articulation au travers de l'échancrure 90 ou du trou traversant 92, de façon que la vis de réglage 62 s'articule avec la fourchette 11 de la partie d'articulation en arrière dudit support fixe. On gagne ainsi en compacité, ce qui est particulièrement avantageux dans le cas d'un antibrouillard.

Il est possible de réaliser l'échancrure 90 ou le trou traversant 92 du support fixe 17 entre les bras d'articulation 18 du support fixe 17. Cette possibilité n'est pas limitée aux exemples illustrés.

Ledit boîtier 50 comprend au moins un puits de passage 64 de ladite vis de réglage 12, ici deux afin que ledit projecteur puisse être utilisé de façon indifférencié en positionnement droit ou gauche, comme évoquée plus haut. Ladite vis de réglage 12 comprend des moyens 66, connus de l'homme de l'art, permettant son articulation selon une liaison pivot dans lesdits puits 64.

Ledit boîtier 50 se présente, par exemple, sous la forme d'une enveloppe sensiblement cylindrique. Le ou lesdits puits 64 de passage des vis de réglage 12 sont orientés sensiblement selon deux cordes parallèles à l'intérieur de ladite enveloppe.

Ledit boîtier 50 comprend une face interne 59 munie de nervures 70 de guidage desdits bras d'articulation 18 du support fixe 17. Lesdites nervures de guidage 70 contribuent à la fixation dudit support fixe 17 dans ledit boîtier 50, par l'intermédiaire desdits bras d'articulation 18 du support fixe 17.

Ladite face interne 59 du boîtier 50 pourra encore comprendre des nervures 72 d'encliquetage, non-visible à la figure 1, de ladite partie d'articulation 5 de la lentille 1, en particulier desdits tourillons 9. Lesdites nervures d'encliquetages 72 sont configurées pour permettre une liaison pivot entre ladite lentille 1 et ledit boîtier 50.

Autrement dit, sous l'actionnement de la vis de réglage 12, le filetage 15 agit sur les nervures 14 et entraine les tourillons 9 et donc la lentille 1 en rotation autour dudit axe d'articulation 3, lesdits tourillons 9 étant libre en rotation dans les fourchettes d'articulation 20 du support fixe 17 et dans les nervures d'encliquetage 72 dudit boîtier 50.

Selon le mode de réalisation des figures 1 et 2, le montage dudit dispositif d'émission s'effectue par l'arrière et ledit boîtier 50 est fermé à son extrémité longitudinale opposée à la glace de fermeture 54 par ledit support fixe 17. Lesdites nervures de guidage 70 et/ou de d'encliquetage sont alors ouvertes vers l'arrière.

Comme illustré à la figure 3 dans laquelle on retrouve les éléments déjà décrits plus haut, le montage dudit dispositif d'émission pourra également s'effectuer par l'avant dans ledit boîtier 50. Ledit boîtier 50 est alors fermé à son extrémité opposée à celle de la glace de fermeture 54 par une paroi de fond 80, non-visible à cette figure. Lesdites nervures de guidage 70 et/ou lesdites nervures d'encliquetage 72 sont alors ouvertes vers l'avant.

Comme illustré aux figures 4 et 5, ladite paroi de fond 80 pourra être issue de matière de l'enveloppe 82 dudit boîtier 50. Ladite paroi de fond 80 présente ici un orifice de passage 82 d'une excroissance longitudinale dudit support 17, en particulier dudit dissipateur thermique 23. Selon cet aspect de l'invention, ledit joint 58 fait étanchéité avec ladite paroi de fond 80.

Il est à noter que les figures 4 et 5 permettent de mieux visualiser le positionnement de ladite source lumineuse 9 le long de l'axe d'articulation 3 ainsi que la coopération entre la vis de réglage 12 et la fourchette 11, ici la fourchette droite, de ladite partie d'articulation 5 de la lentille 1.

## Revendications

1. Dispositif d'émission d'un faisceau lumineux comprenant une lentille (1) et des moyens réalisant une ligne de coupure du faisceau, ledit dispositif étant configuré pour autoriser un réglage d'un positionnement de ladite ligne de coupure, selon une direction donnée, notamment verticale, en fonction d'un positionnement angulaire de ladite lentille (1) autour d'un axe d'articulation (3), ladite lentille (1) comprenant une partie (4), dite optique, de transmission du faisceau et une partie d'articulation (5) en rotation autour dudit axe d'articulation (3), **caractérisé en ce que** ladite partie d'articulation (5) et ladite partie optique (4) sont venues de matière en une seule pièce et **en ce que** ladite partie optique (4) s'étend à partir de bras (7) de ladite partie d'articulation (5) en s'écartant radialement dudit axe d'articulation (3), tandis que lesdits bras (7) comprennent des tourillons d'articulation (9) de la lentille (1) autour dudit axe d'articulation (3).

2. Dispositif selon la revendication 1, dans lequel ladite partie d'articulation (5) comprend des moyens d'entrainement en rotation de ladite lentille (1), lesdits moyens d'entrainement comprennent au moins une fourchette (11) munis de nervures (14) destinées à coopérer avec une vis de réglage (12) orientée orthogonalement audit axe de rotation.

3. Dispositif selon la revendication 2, dans lequel ladite au moins une fourchette (11) comprend des flancs latéraux (13), orientés radialement par rapport audit axe de rotation, lesdits flancs latéraux (13) étant munis de nervures (14) situées en vis-à-vis les unes des autres d'un desdits flanc latéral (13) à l'autre.

4. Dispositif selon l'une quelconque des revendications 2 ou 3, dans lequel ladite au moins une fourchette (11) comprend une languette (16) située, notamment centrée, entre ses flancs radiaux (13).

5. Dispositif selon l'une quelconque des revendications 2 à 4, dans lequel ladite au moins une fourchette (11) est issue d'un tourillon d'articulation (9).

6. Dispositif selon l'une quelconque des revendications précédentes, dans lequel ledit axe d'articulation (3) passe sensiblement par une source lumineuse (6).

7. Dispositif selon la revendication 6 dans lequel, ladite source lumineuse (6) est une diode électroluminescente.

8. Dispositif selon l'une quelconque des revendications 6 ou 7, dans lequel ladite lentille (1) présente un foyer au niveau de ladite source lumineuse (6)

9. Dispositif selon la revendication 2, dans lequel lesdits moyens d'entrainement sont positionnés de part et d'autre de ladite partie optique (4), selon ledit axe d'articulation (3).

10. Dispositif selon l'une quelconque des revendications précédentes, comprenant un support fixe (17) de ladite lentille (1), ledit support fixe (17) comprenant des bras (18) d'articulation en rotation de ladite lentille (1).

11. Dispositif selon la revendication 10, dans lequel ledit support fixe (17) comprend une carte de commande électronique (21) au-delà de laquelle lesdits bras d'articulation (18) s'étendent radialement en direction dudit axe d'articulation (3), ladite carte de commande (21) étant radialement décalée par rapport à ladite source lumineuse (6).

12. Projecteur, notamment pour véhicule automobile comprenant le dispositif d'émission selon l'une quelconque des revendications 10 ou 11.

13. Projecteur selon la revendication 12 comprenant un boîtier (50) en forme d'enveloppe sensiblement cylindrique, ledit boîtier (50) comprenant une face interne (59) munie de nervures (70) de guidage desdits bras d'articulation (18) du support fixe (17).

14. Projecteur selon la revendication 13, dans lequel ladite face interne (59) du boîtier (50) comprend des nervures (72) d'encliquetage de ladite partie d'articulation (5) de la lentille (1).

## Patentansprüche

1. Lichtstrahlemittierende Vorrichtung, die eine Linse (1) und Mittel aufweist, die eine Strahl-Schnittlinie realisieren, wobei die Vorrichtung ausgebildet ist, um eine Einstellung einer Positionierung der Schnittlinie in einer vorgegebenen Richtung, insbesondere vertikal, in Abhängigkeit von einer Winkelpositionierung der Linse (1) um eine Drehachse (3) zuzulassen, wobei die Linse (1) einen als optischen Teil bezeichneten Bestandteil (4) zur Übertragung des Strahls aufweist und einen Drehteil (5) in Drehung um die Drehachse (3), **dadurch gekennzeichnet, dass** der Drehteil (5) und der optische Teil (4) aus einem Stück sind und dass der optische Teil (4) sich ausgehend von Armen (7) des Drehteils (5) erstreckt, indem er sich radial von der Drehachse (3) entfernt, wohingegen die Arme (7) Lagerzapfen (9) zum Drehen der Linse (1) um die Drehachse (3) aufweisen.

2. Vorrichtung nach Anspruch 1, wobei der Drehteil (5) Mittel zum Antreiben der Linse (1) in Rotation aufweist, wobei die Antriebsmittel mindestens eine Gabel (11) aufweisen, die mit Rippen (14) versehen ist, die dazu dienen, mit einer Einstellschraube (12) zusammenzuwirken, die orthogonal zu der Drehachse ausgerichtet ist.

3. Vorrichtung nach Anspruch 2, wobei die mindestens eine Gabel (11) Seitenwände (13) aufweist, die radial in Bezug auf die Drehachse angeordnet sind, wobei die Seitenwände (13) mit Rippen (14) versehen sind, die einander gegenüberliegend von einer der Seitenwände (13) zur anderen angeordnet sind.

4. Vorrichtung nach einem der Ansprüche 2 oder 3, wobei die mindestens eine Gabel (11) eine Zunge (16) aufweist, die, insbesondere zentriert, zwischen ihren Seitenwänden (13) angeordnet ist.

5. Vorrichtung nach einem der Ansprüche 2 bis 4, wobei die mindestens eine Gabel (11) aus einem Lagerzapfen (9) hervorgeht.

6. Vorrichtung nach einem der vorhergehenden Ansprüche, wobei die Drehachse (3) im Wesentlichen durch eine Lichtquelle (6) verläuft.

7. Vorrichtung nach Anspruch 6, wobei die Lichtquelle (6) eine Leuchtdiode ist.

8. Vorrichtung nach einem der Ansprüche 6 oder 7, wobei die Linse (1) einen Brennpunkt im Bereich der Lichtquelle (6) aufweist.

9. Vorrichtung nach Anspruch 2, wobei die Antriebsmittel auf beiden Seiten des optischen Teils (4) gemäß der Drehachse (3) positioniert sind.

10. Vorrichtung nach einem der vorhergehenden Ansprüche, die einen festen Träger (17) für die Linse (1) aufweist, wobei der feste Träger (17) Gelenkarme (18) zur Drehung der Linse (1) aufweist.

11. Vorrichtung nach Anspruch 10, wobei der feste Träger (17) eine elektronische Steuerkarte (21) aufweist, über die hinaus sich die Gelenkarme (18) radial in Richtung der Drehachse (3) erstrecken, wobei die Steuerkarte (21) gegenüber der Lichtquelle (6) radial versetzt angeordnet ist.

12. Scheinwerfer, insbesondere für ein Kraftfahrzeug, der die emittierende Vorrichtung nach einem der Ansprüche 10 oder 11 aufweist.

13. Scheinwerfer nach Anspruch 12, der ein Gehäuse (50) mit einer im Wesentlichen zylindrischen Form aufweist, wobei das Gehäuse (50) eine Innenseite (59) aufweist, die mit Rippen (70) zur Führung der Gelenkarme (18) des festen Trägers (17) versehen ist.

14. Scheinwerfer nach Anspruch 13, wobei die Innenseite (59) des Gehäuses (50) Rippen (72) zum Eingreifen in den Drehteil (5) der Linse (1) aufweist.

## Claims

1. Device for emitting a light beam, comprising a lens (1) and means for producing a cut-off line in the beam, said device being configured to allow a position of said cut-off line to be adjusted in a given direction, especially vertically, depending on an angular position of said lens (1) about a hinge axis (3), said lens (1) comprising an optical part (4) for transmission of the beam and a hinge part (5) that hinges in rotation about said hinge axis (3), **characterized in that** said hinge part (5) and said optical part (4) are made of an integral piece of material and **in that** said optical part (4) extends from arms (7) of said hinge part (5) while getting radially further away from said hinge axis (3), said arms (7) comprising swivels (9) for hinging the lens (1) about said hinge axis (3).

2. Device according to Claim 1 in which said hinge part (5) comprises means for driving said lens (1) in rotation, said driving means comprise at least one fork (11) equipped with ribs (14) intended to interact with an adjusting screw (12) oriented orthogonally to said rotation axis.

3. Device according to Claim 2, in which said at least one fork (11) comprises lateral sides (13) radially oriented relative to the rotation axis, said lateral sides (13) being equipped with ribs (14) located mutually facing on each of said lateral sides (13).

4. Device according to either one of Claims 2 and 3, in which said at least one fork (11) comprises a tab (16) that is located, especially centred, between its radial sides (13).

5. Device according to either one of Claims 2 to 4 in which said at least one fork (11) emerges from one swivel (9)..

6. Device according to any of the preceding claims, in which said hinge axis (3) substantially passes through said light source (6).

7. Device according to Claim 6, in which said light source (6) is a light-emitting diode.

8. Device according to either one of Claims 6 and 7, in which said lens (1) has a focal point at said light source (6).

9. Device according to Claim 2, in which said driving means are positioned on either side of said optical part (4) along said hinge axis (3).

10. Device according to any one of the preceding claims, comprising a fixed holder (17) for holding said lens (1), said fixed holder (17) comprising arms (18) for the hinging of said lens (1) in rotation.

11. Device according to Claim 10, in which said fixed holder (17) comprises an electronic control board (21) through which said hinge arms (18) extend radially towards said hinge axis (3), said control board (21) being radially offset relative to said light source (6).

12. Headlight, especially for an automotive vehicle, comprising the light emitting device according to either one of Claims 10 and 11.

13. Headlight according to Claim 12, comprising a casing (50) taking the form of a substantially cylindrical jacket, said casing (50) comprising an internal face (59) equipped with ribs (70) for guiding said hinge arms (18) of the fixed holder (17).

14. Headlight according to Claim 14, in which said internal face (59) of the casing (50) comprises ribs (72) for snap-fastening said hinge part (5) of the lens (1).
